# EUROPEAN PATENT APPLICATION

(11) **EP 3 506 119 A1**
(43) Date of publication of application: **03.07.2019**
(21) Application number: 18209009.2
(22) Date of filing: 28.11.2018
(51) Int. Cl.: G06F 16/22

(54) **DATA MANAGEMENT SYSTEM EMPLOYING A HASH-BASED AND TREE-BASED KEY-VALUE DATA STRUCTURE**

(30) Priority: 28.12.2017 US 201715856686
(71) Applicant: INTEL Corporation, Santa Clara, CA 95054 (US)
(72) Inventor: TRIKA, Sanjeev N., Portland, OR 97229 (US); PARK, Dongchul, Beaverton, OR 97006 (US); LI, Peng, Beaverton, OR 97007 (US); CORRADO, Francis R., Newton, MA 02460 (US); DICKINSON, Robert A., Boulder, CO 80301 (US)
(74) Representative: Rummler, Felix

(57) **Abstract**

Disclosed is a data management system configured to provide a key-value data structure architecture for use with a storage device. The key-value data structure includes a logic tree having a tree-based index and a hash table having a hash-based index. For a 'scan' (or range query) operation, the data management system scans the tree-based index to determine which keys exist between two search keys in the tree-based index. For a 'get' (e.g., a value request) operation, the data management system applies a hash function to a provided key to determine an index in the hash table by which to retrieve a value that corresponds with the provided key. Other operations (e.g., 'put', 'update', 'delete') may include updating both the tree-based index and the hash-based index. The logic tree stores keys and stores a zero byte-sized value with each of the keys, to limit the size of the logic tree.

## Description

### FIELD

The present disclosure relates to techniques for improving search and access speeds of data structures.

### BACKGROUND

Conventional key-value data structures either provide fast read/write capability or fast scanning capability, but not both. For example, a hash-based key-value system reads and writes data faster than a tree-based key-value system, however, the hash-based key-value system inefficiently (relatively slow) supports a scan operation. Hash-based key-value systems are inefficient at scanning for a particular datum (e.g., a key) because the hash table indices (i.e., hashed keys) are not sorted by the keys and are instead sorted by hashed values of keys. Consequently, hash-based key-value systems must scan their whole index space to support a scan operation, and a scan of a whole index space results in extremely low scan throughput.

### BRIEF DESCRIPTION OF DRAWINGS

Features and advantages of the claimed subject matter will be apparent from the following detailed description of embodiments consistent therewith, which description should be considered with reference to the accompanying drawings, wherein:
FIG. 1 illustrates a functional block diagram of a data management system that includes a key-value data structure consistent with several embodiments of the present disclosure;
FIG. 2 illustrates a data management system consistent with several embodiments of the present disclosure;
FIG. 3 is a flowchart of a process for operations of data management logic for a key-value data structure architecture consistent with several embodiments of the present disclosure; and
FIG. 4 is a flowchart diagram of a process for operations of data management logic for a key-value data structure architecture consistent with several embodiments of the present disclosure.

Although the following Detailed Description will proceed with reference being made to illustrative embodiments, many alternatives, modifications, and variations thereof will be apparent to those skilled in the art.

### DETAILED DESCRIPTION

A system, apparatus and/or method are disclosed herein for a data management system configured to provide a key-value data structure architecture. The key-value data structure includes two data structures. The two data structures of the key-value data structure include a logic tree having a tree-based index and include a hash table having a hash-based index. For a 'scan' (or range query) operation, the data management system scans the tree-based index to determine which keys (if any) exist between two search keys in the tree-based index. For a 'get' (e.g., a value request) operation, the data management system applies a hash function to a provided key to determine an index in the hash table by which to retrieve a value that corresponds with the provided key. Other operations (e.g., 'put', 'update', 'delete') may include updating both the tree-based index and the hash-based index. The logic tree stores keys and stores a null value, a zero byte sized value, or a value that is less than 4-10 bytes in size as a value with each of the keys, so that the size of the table is substantially limited to the size of the keys and the relationships of the keys. The key-value data structure may be used as a database or a file system.

The disclosed data management system includes a key-value data structure architecture that is a hybrid of logic tree-based (e.g., includes a tree-index) and hash table-based (e.g., includes a hash-based index) data structures. The disclosed key-value data structure architecture provides many benefits over the existing data management systems, frameworks, and/or architectures. One advantage of the disclosed data management system is that values can be retrieved from the key-value data structure in constant time (O(1)) because value retrieval is performed with a hash table. Another advantage of the disclosed data management system is that a range of keys can be scanned quickly because the range queries (i.e., 'scan' operations) are performed using a logic tree. In one implementation, the disclosed data management system provides faster operations than other technologies by maintaining at least part of the key-value data structure in volatile memory and by regularly storing backup copies to nonvolatile memory. The disclosed data management system supports both synchronous and asynchronous updates to the hash-based index and the tree-based index. In one implementation, the disclosed data management system may be run entirely in volatile memory or may be run in nonvolatile memory and does not require the tree-based index to be operated solely from volatile memory. The disclosed logic tree of the key-value data structure may be implemented using any one of a number of logic tree structures (e.g., B-tree, a B⁺-tree, a B^{ε}-tree, a log structured merge ("LSM") tree, etc.). The disclosed data management system provides both lower read amplification ("RA") and write amplification ("WA"), than existing LSM-based data structures. Thus, the disclosed data management system may result in better overall system performance, endurance, and cost as compared to existing LSM-based data structures. As opposed to a hash table alone, the disclosed key-value data structure and data management system supports key-based scans. These and other advantages set the disclosed data management system apart from traditional or existing data structure architectures.

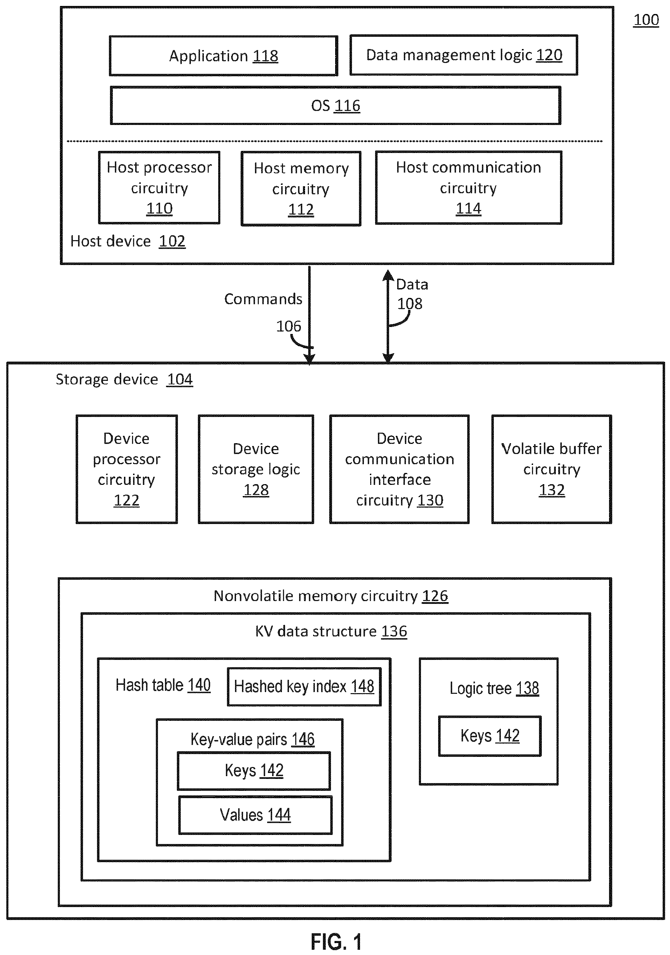

FIG. 1 illustrates a functional block diagram of a data management system 100 that includes a key-value ("KV") data structure consistent with several embodiments of the present disclosure. The data management system 100 includes a host device 102 and a storage device 104. The storage device 104 may be coupled to and/or included in host device 102. The host device 102 is configured to provide commands 106 to the storage device 104. The commands may include, but are not limited to, 'put'(key, value), 'get'(key), 'delete'(key, value), 'update'(key, value), and 'scan' (key1, key2). The 'put' command writes a key-value pair to the KV data structure, the 'get' command reads a value from the KV data structure that is associated with a key, the 'delete' command deletes a key or key-value pair from the KV data structure, the 'update' command updates the value associated with a key in the KV data structure, and the 'scan' command reads/retrieves keys having values between a first key (e.g., key1) and a second key (e.g., key2) within the KV data structure, according to one embodiment. Each key (e.g., Bob, Alice, Fred, etc.) is associated with a corresponding value (e.g., Boston, Massachusetts; Orlando, Florida; San Diego, California, or file 1 location; file 2 location; file 3 location, etc.) The commands 106 may be sent to the storage device 104 via a host interface, using a standard bus command, for example, SCSI (Small Computer System Interface), SAS (Serial Attached SCSI), PCIe (Peripheral Component Interconnect Express), NVMe (Non-Volatile Memory Express), SATA (Serial ATA (Advanced Technology Attachment)), etc. The commands 106 may be converted or translated to one or more bus commands or protocols, prior to transmission. As an example, for the NVMe protocol, the 'get' command may be translated to an NVMe read command, and the 'put' command may be translated to an NVMe write command, according to one embodiment. Data 108 may be transmitted between the host device 102 and the storage device 104. The data 108 may include one or more key-value pairs.

The host device 102 may include, but is not limited to, a mobile telephone including, but not limited to a smart phone (e.g., iPhone®, AndroidR2,-based phone, Blackberry®, Symbian®-based phone, PalmS-based phone, etc.); a wearable device (e.g., wearable computer, "smart" watches, smart glasses, smart clothing, etc.) and/or system; an Internet of Things (IoT) networked device including, but not limited to, a sensor system (e.g., environmental, position, motion, etc.) and/or a sensor network (wired and/or wireless); a computing system (e.g., a server, a workstation computer, a desktop computer, a laptop computer, a tablet computer (e.g., iPad®, GalaxyTab® and the like), an ultraportable computer, an ultramobile computer, a netbook computer and/or a subnotebook computer; etc. The host device 102 includes host processor circuitry 110, host memory circuitry 112, and host communication circuitry 114. For example, host processor circuitry 110 may correspond to a single core or a multi-core general purpose processor, such as those provided by Intel® Corp., etc. The host device 102 may further include an operating system (OS) 116 and one or more applications, e.g., application 118. The host device 102 may further include data management logic 120. The data management logic 120 may be coupled to and/or included in the OS 116 and/or in the application 118. In one nonlimiting example, the data management logic 120 may include a key-value Application Programming Interface (API) and may be used by the OS 116 and/or the application 118 to transmit the commands 106 and/or the data 108.

The storage device 104 may include, but is not limited to, a solid-state drive (SSD), a hard disk drive (HDD), a network attached storage (NAS) system, a storage area network (SAN) and/or a redundant array of independent disks (RAID) system, etc. The storage device 104 includes device processor circuitry 122 and nonvolatile memory (NVM) circuitry 126. The storage device 104 may further include device storage logic 128. The device storage logic 128 may include all or part of the data management logic 120. The device processors circuitry 122 and the device storage logic 128 may together constitute memory controller circuitry for the storage device 104. The storage device 104 may further include device communication interface circuitry 130. The device communication interface circuitry 130 may include, for example, a host interface. The storage device 104 may further include volatile buffer circuitry 132. The volatile buffer circuitry 132 may include volatile random-access memory, e.g., dynamic random-access memory (DRAM) and/or static random-access memory (SRAM), etc. Memory devices often refers to volatile memory technologies. Volatile memory is memory whose state (and therefore the data stored in it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory incudes DRAM (Dynamic Random Access Memory), or some variant such as synchronous DRAM (SDRAM). A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4)LPDDR version 4, JESD209-4, originally published by JEDEC in August 2014), WIO2 (Wide Input/Output version 2, JESD229-2 originally published by JEDEC in August 2014, HBM (High Bandwidth Memory, JESD325, originally published by JEDEC in October 2013, DDR5 (DDR version 5, currently in discussion by JEDEC), LPDDR5 (currently in discussion by JEDEC), HBM2 (HBM version 2), currently in discussion by JEDEC, or others or combinations of memory technologies, and technologies based on derivatives or extensions of such specifications. The JEDEC standards may be available at www(dot)jedec(dot)org.

The nonvolatile memory circuitry 126 may at least partially be configured as nonvolatile buffer circuitry. The nonvolatile buffer circuitry portion of the nonvolatile memory circuitry 126 may include byte-addressable write-in-place memory and other future types of byte-addressable write-in-place memory. The nonvolatile buffer circuitry may also include future generation nonvolatile devices, such as a three dimensional crosspoint memory device, or other byte addressable write-in-place nonvolatile memory devices. In one embodiment, the nonvolatile buffer circuitry may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product.

The device processor circuitry 122 may include, but is not limited to, a microcontroller, an application-specific integrated circuit (ASIC), a programmable logic device (PLD), a complex PLD, etc. The volatile buffer circuitry 132 may be configured to store all or part of a KV data structure 136, as described herein. Nonvolatile memory circuitry 126 may be configured to store all or part of the KV data structure 136.

The nonvolatile memory circuitry 126 includes a storage medium that does not require power to maintain the state of data stored in the storage medium. The nonvolatile memory circuitry 126 may include block addressable read-modify-write non-volatile memory. The nonvolatile memory circuitry 126 may include, but is not limited to, a NAND flash memory (e.g., a Triple Level Cell (TLC) NAND or any other type of NAND (e.g., Single Level Cell (SLC), Multi Level Cell (MLC), Quad Level Cell (QLC), etc.)), NOR memory, solid state memory (e.g., planar or three Dimensional (3D) NAND flash memory or NOR flash memory), storage devices that use chalcogenide phase change material (e.g., chalcogenide glass), byte addressable nonvolatile memory devices, ferroelectric memory, silicon-oxide-nitride-oxide-silicon (SONOS) memory, polymer memory (e.g., ferroelectric polymer memory), byte addressable random accessible 3D XPoint™ memory (or other 3D crosspoint memory architectures), ferroelectric transistor random access memory (Fe-TRAM), magnetoresistive random access memory (MRAM), phase change memory (PCM, PRAM), resistive memory, ferroelectric memory (F-RAM, FeRAM), spin-transfer torque memory (STT), thermal assisted switching memory (TAS), millipede memory, floating junction gate memory (FJG RAM), magnetic tunnel junction (MTJ) memory, electrochemical cells (ECM) memory, binary oxide filament cell memory, interfacial switching memory, battery-backed RAM, ovonic memory, nanowire memory, electrically erasable programmable read-only memory (EEPROM), etc. In some embodiments, the byte addressable random accessible 3D XPoint™ memory may include a transistor-less stackable cross point architecture in which memory cells sit at the intersection of words lines and bit lines and are individually addressable and in which bit storage is based on a change in bulk resistance.

In operation, the host device 102 is configured to store, update, search, and retrieve the data 108 to/from the storage device 104. The data 108 may include keys, values, and/or key-value pairs, and may be written to or read from the storage device 104 by OS 116 and/or application 118 via the data management logic 120. In one example, the data 108 may be associated with execution of the application 118. In another example, the data 108 may be associated with operation of the OS 116. The OS 116 and/or application 118 may be configured to provide the data management logic 120 an indication that there is data to be stored in the storage device 104.

The storage device 104 is configured to support a key-value (KV) interface, and is an object device. The KV interface includes 'put'(key, value), 'get'(key), 'delete'(key, value), 'update'(key, value), and 'scan'(keyl, key2) commands. The 'put'(key, value) command stores a value with a key in the storage device 104. The 'get'(key) command sends a key in order to retrieve a value associated with that key from the storage device 104. The 'delete'(key,value) command deletes a key and its corresponding value (if one exists) from the KV data structure 136. The 'update'(key, value) command updates the value associated with a key to a new value transmitted with the command. The `scan'(key1, key2) command requests any keys (zero, one, or more) stored in the KV data structure 136 that are between the string of key1 and the string of key2. Keys and values may be of arbitrary lengths of strings and/or numbers, specified by the host device 102, e.g., data management logic 120. The host device 102 may issue these commands to the storage device 104 via protocol extensions, e.g., via NVMe (Non-Volatile Memory Express) or NVMe over Fabric extensions, or may issue these commands using existing protocols such as S3 (Amazon Simple Storage Service), Swift (Swift general purpose programming language) and/or Kinetic (Seagate Kenetic Open Storage Platform).

A physical interface between host device 102 and storage device 104 may comply and/or be compatible with one or more interface protocols including, but not limited to, PCIe (Peripheral Component Interconnect Express), NVMe (Non-Volatile Memory Express), SCSI (Small Computer System Interface), AHCI (Advance Host Controller Interface), SATA (Serial ATA (Advanced Technology Attachment)), and/or PATA (Parallel ATA), etc. The volatile buffer circuitry 132 is configured to facilitate the transmission of data between the host device 102 and the storage device 104. The nonvolatile memory circuitry 126 is configured to store the data 108 as keys and values in the KV data structure 136.

The KV data structure 136 includes a logic tree 138 and a hash table 140 for managing the data 108 stored in the KV data structure 136. The logic tree 138 maintains keys 142 in a sortable data structure that facilitates range queries (e.g., data scans). A range query or 'scan' command searches the logic tree 138 for keys that are between a first key (e.g., key1) and a second key (e.g., key2) and returns the keys that are between the first key and the second key, according to one embodiment. A typical use of a logic tree 138 is to store values with the keys that are managed by the logical tree 138. However, according to the present disclosure, a null value, a zero byte value, some non-consequential value, no value, or a value that is sized less than 10 bytes is stored with the keys 142. By only storing the keys 142, the logic tree 138 occupies less space in the storage device 104, while concurrently providing a sortable structure for all of the keys associated with the KV data structure 136. The sortable data structure employed by the logic tree 138 may include any tree index structure, such as, but not limited to, a B-tree, a B-tree, a B^{ε}-tree, an LSM tree, etc.

The hash table 140 maintains the keys 142 and values 144 that are associated with the keys 142, both stored as key-value pairs 146. The key-value pairs 146 are indexed in the hash table 140 by a hashed key index 148. If a command 106 from the host device 102 to the storage device 104 is a command that includes a known key, the hash table 140 provides a very efficient retrieval of a value for the key because the hashed value of the key is the index to a slot or bucket in the hash table 140. However, because the indices of the hash table 140 are sorted by hashed values of the keys 142, the hash table 140 would be a less efficient tool for scanning a range of keys (e.g., for performing a range query) than using the logical tree 138.

The combination of the logical tree 138 and the hash table 140 make the KV data structure 136 a hybrid data structure that provides constant order, e.g., O(1), data retrieval (with a known key), in addition to fast range queries (through the logical tree 138). Maintaining both a full key-value hash table and a full key-value logical tree would almost double the quantity of space consumed within the storage device 104. Therefore, as discussed, the logical tree 138 is size-limited by storing the keys 142 without the values 144, and the hash table 140 includes both the keys 142 and the values 144 in the key-value pairs 146.

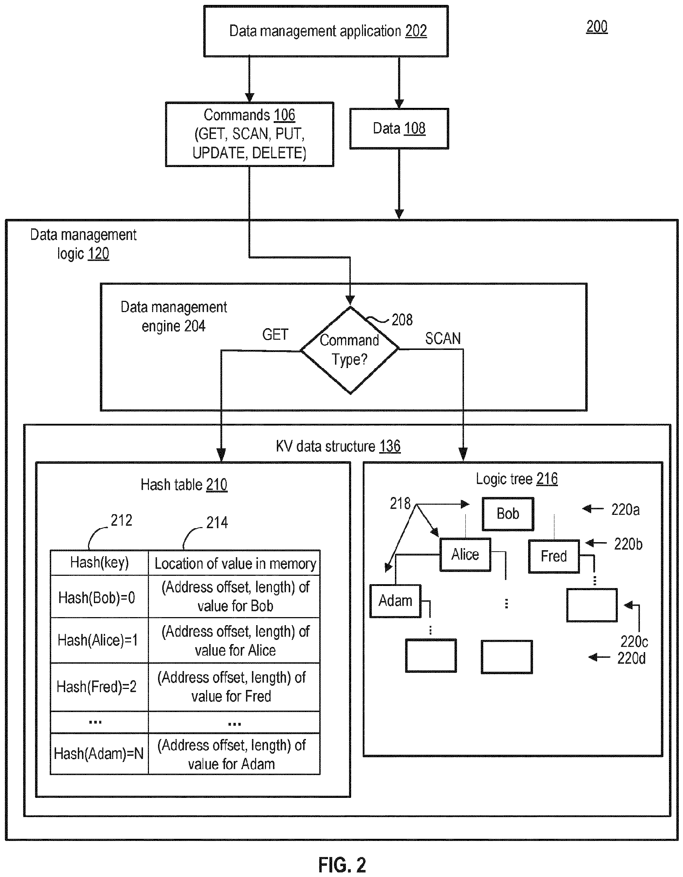

FIG. 2 illustrates a KV data management system 200 that may operate within the data management system 100 of FIG. 1. The KV data management system 200 includes a data management application, the data management logic 120 (of FIG. 1), and an illustrative simplified example of the KV data structure 136 of FIG. 1. The data management application 202 may be a database application, a social media application, or any one of a number of applications that manage large quantities of data (e.g., to provide services to hundreds, thousands, or millions of users). The data management application 202 provides the commands 106 and the data 108 to the data management logic 120. The data management application 202 may receive the data 108 from the data management logic 120 (e.g., after the data 106 is retrieved from the KV data structure 136). The data management logic 120 includes a data management engine 204 and may include the KV data structure 136.

The data management engine 204 receives the commands 106 from the data management application 202 and receives or provides the data 108 from/to the data management application 202, depending upon the command received. The data management engine 204 processes the commands 106 to determine how to interact with the KV data structure 136. At operation 208 within the data management engine 204, the data management engine 204 determines a command type, to determine how to update or otherwise maintain the KV data structure 136. If, for example, the command type is a 'get' command the data management engine 204 performs a data retrieval operation on a hash table 210 within the KV data structure 136. However, if the command type is a 'scan' command, the data management engine 204 performs a search or scan of at least part of the logic tree 216. Notably, if the command is a 'get' command, the data management engine 204 performs one or more operations on the hash table 210, and does not perform an operation on the logic tree 216. However, if the command is a 'scan' command, the data management engine 204 performs one or more operations on the logic tree 216, and not the hash table 210. The hash table 210 is a hash-based KV sub-system within the data management logic 120 and/or within the KV data structure 136, according to one embodiment. The logic tree 216 is a tree-based KV sub-system within the data management logic 120 and/or within the KV data structure 136, according to one embodiment.

The data management engine 204 is responsive to other commands as well. The data management engine 204 interacts with both the logic tree 216 and the hash table 210 for the 'put', 'update', and 'delete' commands. The data management engine 204 or other portions of the data management logic 120 may synchronously or asynchronously update the logic tree 216 and the hash table 210 in response to the 'put', 'update', and 'delete' commands. For a synchronous update, both a hash-based index for the hash table 210 and a tree-based index of the logic tree 216 may concurrently updated. For the example, during a 'put' command to write a KV pair to the KV data structure 136, both a representation of the key and a representation of value data are written to the hash table 210. For the logic tree 216, the value stored in the hash table 210 is not written to a node, however, the logic tree 216 is updated with the new key that is written to the hash table 210. This causes a synchronous tree-based index update, but does not corrupt/update the existing value data which has been written to the hash table 210 within the KV data structure 136. This mode does not cause a data inconsistency problem, but updating both indices at the same time may have the potential of affecting performance. For an asynchronous update, the data management logic 120 asynchronously updates both the hash-based index and the tree-based index at different times or at processing-convenient at times. In practice, either the hash table 210 is updated first and the logic tree 216 is updated second, or vice versa, based on implemented designs or policies. As an example, if the hash table 210 is located in non-volatile memory (e.g., Intel 3D Xpoint™) and the logic tree is located in volatile memory, in response to a 'put' command, the hash table 210 may be updated first and the logic tree 216 may be updated at some other time second, to at least partially mask latency delays associated with updating both data structures.

The hash table 210 is an illustrative simplified example of the hash table 140 of FIG. 1. The hash table 210 includes indices 212 and slots 214. The indices 212 are hashed values of the keys 142 (shown in FIG. 1). The data management engine 204 can apply one of a number of hash algorithms to the keys 142 to produce the indices 112. Generically, the hash function is a function that converts a range of keys into a range of indices of an array. Put another way, the hash function is a function that maps keys of arbitrary length and value into a finite range of indices, e.g., for an array. The illustrated indices range from 0, 1, 2, ..., N, where N can be a number that is in the thousands, millions, billions, trillions, etc. The slots 214 include references to the values 144 (shown in FIG. 1). Each key (e.g., Bob, Alice, Fred, Adam, etc.) is associated with a corresponding value (e.g., Boston, Massachusetts; Orlando, Florida; San Diego, California; Portland, Oregon, etc.). The slots 214 may include the value that corresponds with each key or with each hashed key, according to one embodiment. The slots 214 may include references to locations of the values in memory (e.g., pointers) for each of the values that correspond to each hashed key, according to one embodiment. When the data management engine 204 receives a 'get' command, the data management engine 204 applies the hash function to the key, and retrieves the value or the address offset and length of the value for the key from the relevant slot 214. The data management engine 204 may then retrieve the actual value from memory, by using the value location information retrieved from one or more slots 214 in the hash table 210. For a 'put' command, the data management engine 204 hashes a key, and stores the address offset (in memory) and the length for the value in a slot 214 that is associated with the index that is calculated as the hash of the key. For the 'update' command, the data management engine 204 updates the table based on the index of the key, and for the 'delete' command, the data management engine 204 deletes the hash of the key from the index of the hash table 210. In one implementation of the hash table 210, each slot 214 includes a single one of the key-value pairs 146. In one implementation of the hash table 210, the slots 214 store hashed versions of the key-value pairs 146. In one implementation of the hash table 210, the key-value pairs 146 are stored in the slots 214 with a key and a pointer to a location in memory that stores the key's value. In one implementation, to manage collisions, one or more of the slots 214 are linked lists, which may hold multiple pointers for values associated with keys that hash to the same index number.

The logic tree 216 is an illustrative simplified example of the logic tree 138 of FIG. 1. The logic tree 216 includes a plurality of nodes 218 that store the keys 142. The nodes 218 store the keys (e.g., Bob, Alice, Fred, Adam, etc.) that are maintained in the hash table 210. When the data management engine 204 receives a 'scan' command, which cannot be efficiently executed with the hash table 210, the data management engine 204 uses the logic tree 216 to retrieve the results of a scan (e.g. a range query). The logic tree 216 includes the plurality of nodes 218 that are logically organized into hierarchical tiers or levels 220a, 220b, 220c, etc. (collectively, levels 220) of leaf nodes that store the keys 142. Any one of a number of types of logic trees may be used to implement the logic tree 216.

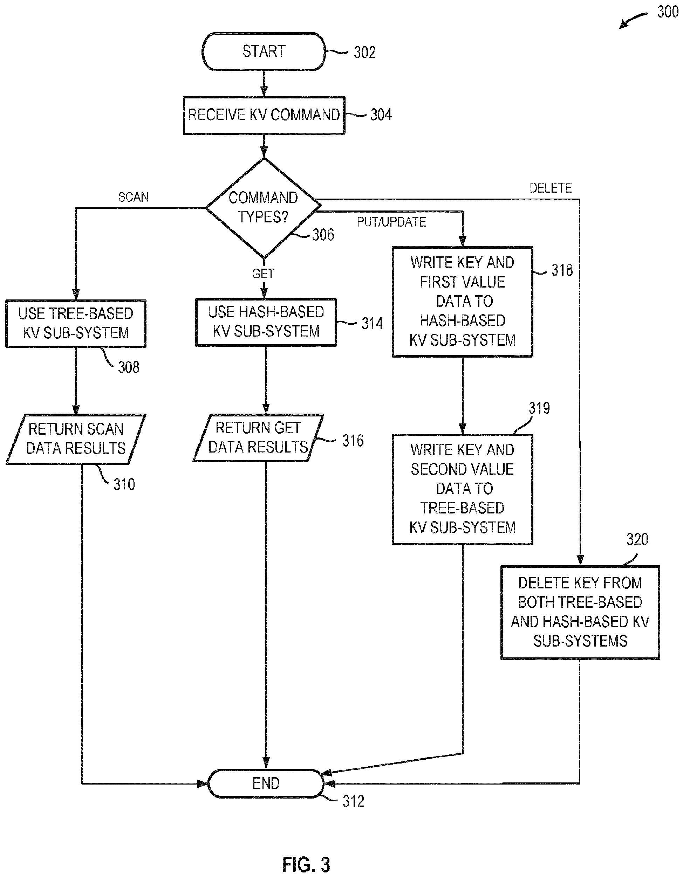

FIG. 3 is a flowchart of a process 300 operations of data management logic 120 for a key-value data structure architecture of FIGS. 1 and 2. Although a particular sequence of steps is illustrated and described, one or more of the illustrated and described steps may be performed in one or more other sequences, according to various other embodiments.

At operation 302, the process 300 starts. Operation 302 may proceed to operation 304.

At operation 304, the process 300 issues one or more key-value commands. Examples of key-value command include 'scan', 'get', 'put', 'update', 'delete', etc. Operation 304 may proceed to operation 306.

At operation 306, the process 300 determines the key-value command type. If the key-value command type is a 'scan' command, the process 300 may proceed to operation 308. If the key-value command type is a 'get' command, the process 300 may proceed to operation 314. If the key-value command is 'put' or 'update', the process 300 may proceed to operation 318. If the key-value command is 'delete', the process 300 may proceed to operation 320.

At operation 308, the process 300 uses a tree-based KV sub-system (e.g., a logic tree) to scan a range of keys (e.g., between a first key and a second key) received with the key-value command. Operation 308 may proceed to operation 310.

At operation 310, the process 300 may return scan data results that include one or more keys that are within the range of the first key and the second key. Operation 310 may proceed to operation 312, where the process 300 ends.

At operation 314, the process 300 uses a hash-based KV sub-system (e.g., a hash table) to return a value associated with a key that is provided with the 'get' command. Operation 314 may proceed to operation 316.

At operation 316, the process 300 returns the 'get' data results, which may include key-value pairs, may include a value associated with the key provided during the 'get' command, or may include an address offset in memory and a length of the value to be retrieved from memory. Operation 316 may proceed to operation 312, where the process 300 ends.

At operation 318, the process 300 writes key and first value data to a hash-based KV sub-system. That is, the hash of the key is calculated as a new index for the hash index of the hash table, the value is stored in a memory, and the offset address (in memory) of the value and the size of the value are stored in the hash table, according to one embodiment. Operation 318 may proceed to operation 319.

At operation 319, the process 300 writes key and second value data to the tree-based KV sub-system. The second value data is smaller than the first value data, to keep the overall size of the tree-based KV sub-system relatively small in memory. The first value data is the original value or actual value to be associated with a particular key and that is to be retrieved with a key with a 'get' command, according to one embodiment. The second value data is a dummy value, a NULL value, a zero-byte value, or the like. Operation 318 may be executed before operation 319, operation 318 may be executed after operation 319, or operation 318 may be executed concurrently with operation 319, according to various embodiments. Operation 319 may proceed to operation 312, where the process 300 ends.

At operation 320, the process 300 deletes a key from both tree-based and hash-based KV sub-systems. Operation 320 proceeds to operation 312, where the process ends.

Thus, the data management logic 120 utilizes the benefits of hash-based indexing and tree-based indexing concurrently to hybridize the operation of the KV data structure 136 of FIG. 1.

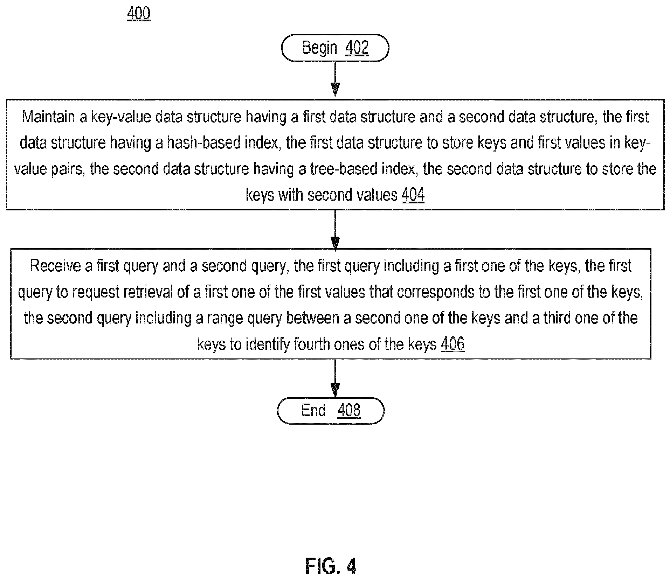

FIG. 4 is a flowchart of a process 400 for operations of data management logic for a key-value data structure architecture. At operation 402, the process 400 starts. Operation 402 proceeds to operation 404.

At operation 404, the process 400 includes maintaining a key-value data structure having a first data structure and a second data structure, the first data structure having a hash-based index, the first data structure to store keys and first values in key-value pairs, the second data structure having a tree-based index, the second data structure to store the keys second values. Operation 404 proceeds to operation 406.

At operation 406, the process 400 includes receiving a first query and a second query, the first query including a first one of the keys, the first query to request retrieval of a first one of the first values that corresponds to the first one of the keys, the second query including a range query between a second one of the keys and a third one of the keys to identify fourth ones of the keys. Operation 406 proceeds to operation 408.

At operation 408, the process 400 ends.

While the flowcharts of FIGS. 3 and 4 illustrate operations according various embodiments, it is to be understood that not all of the operations depicted in FIGS. 3 and 4 are necessary for other embodiments. In addition, it is fully contemplated herein that in other embodiments of the present disclosure, the operations depicted in FIGS. 3 and 4 and/or other operations described herein may be combined in a manner not specifically shown in any of the drawings, and such embodiments may include less or more operations than are illustrated in FIGS. 3 and 4. Thus, claims directed to features and/or operations that are not exactly shown in one drawing or table are deemed within the scope and content of the present disclosure.

As used in any embodiment herein, the term "logic" may refer to an application, software, firmware and/or circuitry configured to perform any of the aforementioned operations. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in memory devices.

"Circuitry," as used in any embodiment herein, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry 110, 122 executing code and/or instructions sets (e.g., software, firmware, etc.) corresponding to the functionality described herein, thus transforming a general-purpose processor into a specific-purpose processing environment to perform one or more of the operations described herein. In some embodiments, the various components and circuitry of the memory controller circuitry or other systems may be combined in a system-on-a-chip (SoC) architecture.

The foregoing provides example system architectures and methodologies, however, modifications to the present disclosure are possible. The processors may include one or more processor cores and may be configured to execute system software. System software may include, for example, an operating system. Device memory may include I/O memory buffers configured to store one or more data packets that are to be transmitted by, or received by, a network interface.

The operating system (OS) 116 may be configured to manage system resources and control tasks that are run on, e.g., host device 102. For example, the OS may be implemented using Microsoft® Windows®, HP-UX®, Linux®, or UNIX®, although other operating systems may be used. In another example, the OS may be implemented using Android™, iOS, Windows Phone® or BlackBerry®. In some embodiments, the OS may be replaced by a virtual machine monitor (or hypervisor) which may provide a layer of abstraction for underlying hardware to various operating systems (virtual machines) running on one or more processing units. The operating system and/or virtual machine may implement a protocol stack. A protocol stack may execute one or more programs to process packets. An example of a protocol stack is a TCP/IP (Transport Control Protocol/Internet Protocol) protocol stack comprising one or more programs for handling (e.g., processing or generating) packets to transmit and/or receive over a network.

The host memory circuitry 112 may include one or more of the following types of memory: semiconductor firmware memory, programmable memory, nonvolatile memory, read only memory, electrically programmable memory, random access memory, flash memory, magnetic disk memory, and/or optical disk memory. Either additionally or alternatively memory circuitry may include other and/or later-developed types of computer-readable memory.

Embodiments of the operations described herein may be implemented in a computer-readable storage device having stored thereon instructions that when executed by one or more processors perform the methods. The processor may include, for example, a processing unit and/or programmable circuitry. The computer-readable storage device may include a machine readable storage device including any type of tangible, non-transitory storage device, for example, any type of disk including floppy disks, optical disks, compact disk read-only memories ("CD-ROMs"), compact disk rewritables ("CD-RWs"), and magneto-optical disks, semiconductor devices such as read-only memories ("ROMs"), random access memories ("RAMs") such as dynamic and static RAMs, erasable programmable read-only memories ("EPROMs"), electrically erasable programmable read-only memories ("EEPROMs"), flash memories, magnetic or optical cards, or any type of computer-readable storage devices suitable for storing electronic instructions.

The data management logic 120 and device storage logic 128 may be configured to provide and execute, respectively, commands 106, as described herein. Commands 106 may include for example, Put(key, value), Get(key), Delete(key), Update(key, value), Scan(key1, key2), etc. The data management logic 120, device storage logic 128 and/or one or more of commands 106 may comply or be compatible with a non-volatile memory ("NVM") Express specification related to communication with, and operation of, storage devices. For example, the data management logic 120, device storage logic 128 and/or one or more of commands 106 may comply with a NVM Express specification titled: NVM Express®, Revision 1.2, released November 2014, by NVM Express Workgroup, and/or Revision 1.2.1, released June 2016, and/or later and/or related versions of this specification, e.g., Revision 1.3, released May 2017.

In some embodiments, a hardware description language ("HDL") may be used to specify circuit and/or logic implementation(s) for the various logic and/or circuitry described herein. For example, in one embodiment the hardware description language may comply or be compatible with a very high speed integrated circuits ("VHSIC") hardware description language ("VHDL") that may enable semiconductor fabrication of one or more circuits and/or logic described herein. The VHDL may comply or be compatible with IEEE Standard 1076-1987, IEEE Standard 1076.2, IEEE1076.1, IEEE Draft 3.0 of VHDL-2006, IEEE Draft 4.0 of VHDL-2008 and/or other versions of the IEEE VHDL standards and/or other hardware description standards.

In some embodiments, a Verilog hardware description language ("HDL") may be used to specify circuit and/or logic implementation(s) for the various logic and/or circuitry described herein. For example, in one embodiment, the HDL may comply or be compatible with IEEE standard 62530-2011: SystemVerilog - Unified Hardware Design, Specification, and Verification Language, dated July 07, 2011; IEEE Std 1800™-2012: IEEE Standard for SystemVerilog-Unified Hardware Design, Specification, and Verification Language, released February 21, 2013; IEEE standard 1364-2005: IEEE Standard for Verilog Hardware Description Language, dated April 18, 2006 and/or other versions of Verilog HDL and/or SystemVerilog standards.

### Examples

Examples of the present disclosure include subject material such as a memory controller, a method, and a system related to reducing program disturb degradation in a memory array, as discussed below.
**Example** 1. According to this example there is provided an apparatus. The apparatus may include circuitry to store a key-value data structure having a first data structure and a second data structure, the first data structure having a hash-based index, the first data structure to store keys and first values in key-value pairs, the second data structure having a tree-based index, the second data structure to store the keys and second values; and controller circuitry for a storage device. The controller circuitry may include logic to receive a first query and a second query, the first query including a first one of the keys, the first query to request retrieval of a first one of the first values that corresponds to the first one of the keys, the second query including a range query between a second one of the keys and a third one of the keys to identify fourth ones of the keys.
**Example 2.** This example includes the elements of example 1, wherein the first query may be a 'get' command and the second query is a 'scan' command.
**Example 3.** This example includes the elements of example 1, wherein the second values may include null values, zero byte-sized values, dummy values, or other information having an overall size in bytes that is less than an overall size in bytes of the first values.
**Example 4.** This example includes the elements of example 1, wherein the logic may include data management logic to update both the hash-based index and the tree-based index to modify the key-value data structure, in response to an 'update', 'delete', or 'put' command.
**Example 5.** This example includes the elements of example 1, wherein the logic may be to maintain the key-value data structure at least partially in nonvolatile memory circuitry and at least partially in device buffer circuitry.
**Example 6.** This example includes the elements of example 1, wherein the hash-based index may include indices that are hashes of the keys.
**Example 7.** This example includes the elements of example 1, wherein the logic of the controller circuit may be to apply a hash function to the first one of the keys to determine a first index in the hash-based index of the first data structure, in response to the first query; transfer, to a first location, the first one of the first values from a slot addressed by the first index in the first data structure; search the second data structure with the second one of the keys and the third one of the keys to identify the fourth ones of the keys between the second one of the key and the third one of the keys, in response to the second query; and transfer, to the first location, the fourth ones of the keys between the second one of the keys and the third one of the keys.
**Example 8.** This example includes the elements of example 7, wherein the first location may be cache memory in the controller circuitry and the controller circuitry may be storage device processor circuitry, or the first location may be buffer circuitry for the storage device circuitry.
**Example 9.** According to this example there is provided a storage device. The storage device may include device processor circuitry; device buffer circuitry; storage device circuitry to store a key-value data structure having a first data structure and a second data structure, the first data structure having a hash-based index, the first data structure to store keys and first values in key-value pairs, the second data structure having a tree-based index, the second data structure to store the keys and second values; and controller circuitry for a storage device. The controller circuitry including logic may be to receive a first query and a second query, the first query including a first one of the keys, the first query to request retrieval of a first one of the first values that corresponds to the first one of the keys, the second query including a range query between a second one of the keys and a third one of the keys to identify fourth ones of the keys.
**Example 10.** This example includes the elements of example 9, wherein the first query may be a 'get' command and the second query is a 'scan' command.
**Example 11.** This example includes the elements of example 9, wherein the second values may include null values, zero byte-sized values, dummy values, or other values having an accumulative size in bytes that is less than an overall size in bytes of the first values.
**Example 12.** This example includes the elements of example 9, wherein the logic may include data management logic to update both the hash-based index and the tree-based index to modify the key-value data structure, in response to an 'update', 'delete', or 'put' command.
**Example 13.** This example includes the elements of example 9, wherein the logic may be to maintain the key-value data structure at least partially in nonvolatile memory circuitry and at least partially in device buffer circuitry.
**Example 14.** This example includes the elements of example 9, wherein the hash-based index may include indices that are hashes of the keys.
**Example 15.** This example includes the elements of example 9, wherein the logic of the controller circuit may be to apply a hash function to the first one of the keys to determine a first index in the hash-based index of the first data structure, in response to the first query; transfer, to a first location, the first one of the first values from a slot addressed by the first index in the first data structure; search the second data structure with the second one of the keys and the third one of the keys to identify the fourth ones of the keys between the second one of the key and the third one of the keys, in response to the second query; and transfer, to the first location, the fourth ones of the keys between the second one of the keys and the third one of the keys.
**Example 16.** This example includes the elements of example 15, wherein the first location may be buffer circuitry for the storage device circuitry, or the first location may be cache memory in the controller circuitry and the controller circuitry is storage device processor circuitry.
**Example 17.** According to this example there is provided a computer readable storage device having stored thereon instructions that when executed by one or more processors result in operations. The operations include maintain a key-value data structure having a first data structure and a second data structure, the first data structure having a hash-based index, the first data structure to store keys and first values in key-value pairs, the second data structure having a tree-based index, the second data structure to store the keys with second values; and receive a first query and a second query, the first query including a first one of the keys, the first query to request retrieval of a first one of the first values that corresponds to the first one of the keys, the second query including a range query between a second one of the keys and a third one of the keys to identify fourth ones of the keys.
**Example 18.** This example includes the elements of example 17, wherein the first query may be a 'get' command and the second query is a 'scan' command.
**Example 19.** This example includes the elements of example 17, wherein the second values may include null values, zero byte-sized values, dummy values, or other values having an accumulative size in bytes that is less than an overall size in bytes of the first values.
**Example 20.** This example includes the elements of example 17, wherein the operations may include update the hash-based index and the tree-based index to modify the key-value data structure, in response to an 'update', 'delete', or 'put' commands.
**Example 21.** This example includes the elements of example 17, wherein the operations include maintain the key-value data structure at least partially in nonvolatile memory circuitry and at least partially in device buffer circuitry.
**Example 22.** This example includes the elements of example 17, wherein the hash-based index includes indices that are hashes of the keys.
**Example 23.** This example includes the elements of example 17, wherein the operations include apply a hash function to the first one of the keys to determine a first index in the hash-based index of the first data structure, in response to the first query; transfer, to a first location, the first one of the first values from a slot addressed by the first index in the first data structure; search the second data structure with the second one of the keys and the third one of the keys to identify the fourth ones of the keys between the second one of the key and the third one of the keys, in response to the second query; and transfer, to the first location, the fourth ones of the keys between the second one of the keys and the third one of the keys.
**Example 24.** This example includes the elements of example 23, wherein the first location may be buffer circuitry for storage device circuitry, or the first location may be cache memory in controller circuitry and the controller circuitry is storage device processor circuitry.
**Example 25.** According to this example there is provided a method. The method may include maintaining a key-value data structure having a first data structure and a second data structure, the first data structure having a hash-based index, the first data structure to store keys and first values in key-value pairs, the second data structure having a tree-based index, the second data structure to store the keys with second values; and receiving a first query and a second query, the first query including a first one of the keys, the first query to request retrieval of a first one of the first values that corresponds to the first one of the keys, the second query including a range query between a second one of the keys and a third one of the keys to identify fourth ones of the keys.
**Example 26.** This example includes the elements of example 25, wherein the first query is a 'get' command and the second query is a 'scan' command.
**Example 27.** This example includes the elements of example 25, wherein the second values include null values, zero byte-sized values, dummy values, or other values having an accumulative size in bytes that is less than an overall size in bytes of the first values.
**Example 28.** This example includes the elements of example 25, further comprising updating the hash-based index and the tree-based index to modify the key-value data structure, in response to an 'update', 'delete', or 'put' commands.
**Example 29.** This example includes the elements of example 25, further comprising: maintaining the key-value data structure at least partially in nonvolatile memory circuitry and at least partially in device buffer circuitry.
**Example 30.** This example includes the elements of example 25, wherein the hash-based index includes indices that are hashes of the keys.
**Example 31.** This example includes the elements of example 25, further comprising: applying a hash function to the first one of the keys to determine a first index in the hash-based index of the first data structure, in response to the first query; transferring, to a first location, the first one of the first values from a slot addressed by the first index in the first data structure; searching the second data structure with the second one of the keys and the third one of the keys to identify the fourth ones of the keys between the second one of the key and the third one of the keys, in response to the second query; and transferring, to the first location, the fourth ones of the keys between the second one of the keys and the third one of the keys.
**Example 32.** This example includes the elements of example 31, wherein the first location is buffer circuitry for storage device circuitry, or the first location is cache memory in controller circuitry and the controller circuitry is storage device processor circuitry.
**Example 33.** According to this example there is provided a memory controller. The memory controller includes means for maintaining a key-value data structure having a first data structure and a second data structure, the first data structure having a hash-based index, the first data structure to store keys and first values in key-value pairs, the second data structure having a tree-based index, the second data structure to store the keys with second values; and means for receiving a first query and a second query, the first query including a first one of the keys, the first query to request retrieval of a first one of the first values that corresponds to the first one of the keys, the second query including a range query between a second one of the keys and a third one of the keys to identify fourth ones of the keys.
**Example 34.** This example includes the elements of example 33, wherein the first query is a 'get' command and the second query is a 'scan' command.
**Example 35.** This example includes the elements of example 33, wherein the second values include null values, zero byte-sized values, dummy values, or other values having an accumulative size in bytes that is less than an overall size in bytes of the first values.
**Example 36.** This example includes the elements of example 33, further comprising means for updating the hash-based index and the tree-based index to modify the key-value data structure, in response to an 'update', 'delete', or 'put' commands.
**Example 37.** According to this example there is provided device comprising means to perform the method of any one of examples 25 to 32.
**Example 38.** According to this example there is provided computer readable storage device having stored thereon instructions that when executed by one or more processors result in operations comprising: the method according to any one of examples 25 to 32.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents.

Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications.

## Claims

1. An apparatus, comprising:
storage device circuitry to store a key-value data structure having a first data structure and a second data structure, the first data structure having a hash-based index, the first data structure to store keys and first values in key-value pairs, the second data structure having a tree-based index, the second data structure to store the keys and second values; and
controller circuitry for a storage device, the controller circuitry including logic to:
receive a first query and a second query, the first query including a first one of the keys, the first query to request retrieval of a first one of the first values that corresponds to the first one of the keys, the second query including a range query between a second one of the keys and a third one of the keys to identify fourth ones of the keys.

2. The apparatus of claim 1, wherein the first query is a GET command and the second query is a SCAN command.

3. The apparatus of claim 1, wherein the second values include null values, zero byte-sized values, dummy values, or other information having an overall size in bytes that is less than an overall size in bytes of the first values.

4. The apparatus of claim 1, wherein the logic includes data management logic to update both the hash-based index and the tree-based index to modify the key-value data structure, in response to an UPDATE, DELETE, or PUT command.

5. The apparatus of claim 1, wherein the logic to maintain the key-value data structure at least partially in nonvolatile memory circuitry and at least partially in device buffer circuitry.

6. The apparatus of claim 1, wherein the hash-based index includes indices that are hashes of the keys.

7. The apparatus of claim 1, wherein the logic of the controller circuit to:
apply a hash function to the first one of the keys to determine a first index in the hash-based index of the first data structure, in response to the first query;
transfer, to a first location, the first one of the first values from a slot addressed by the first index in the first data structure;
search the second data structure with the second one of the keys and the third one of the keys to identify the fourth ones of the keys between the second one of the key and the third one of the keys, in response to the second query; and
transfer, to the first location, the fourth ones of the keys between the second one of the keys and the third one of the keys.

8. The apparatus of claim 7, wherein the first location is cache memory in the controller circuitry and the controller circuitry is storage device processor circuitry, or the first location is buffer circuitry for the storage device circuitry.

9. A storage device comprising:
device processor circuitry;
device buffer circuitry;
storage device circuitry to store a key-value data structure having a first data structure and a second data structure, the first data structure having a hash-based index, the first data structure to store keys and first values in key-value pairs, the second data structure having a tree-based index, the second data structure to store the keys and second values; and
controller circuitry for a storage device, the controller circuitry including logic to:
receive a first query and a second query, the first query including a first one of the keys, the first query to request retrieval of a first one of the first values that corresponds to the first one of the keys, the second query including a range query between a second one of the keys and a third one of the keys to identify fourth ones of the keys.

10. A method comprising:
maintaining a key-value data structure having a first data structure and a second data structure, the first data structure having a hash-based index, the first data structure to store keys and first values in key-value pairs, the second data structure having a tree-based index, the second data structure to store the keys second values; and
receiving a first query and a second query, the first query including a first one of the keys, the first query to request retrieval of a first one of the first values that corresponds to the first one of the keys, the second query including a range query between a second one of the keys and a third one of the keys to identify fourth ones of the keys.

11. The method of claim 10, wherein the first query is a GET command and the second query is a SCAN command.

12. The method of claim 10, wherein the second values include null values, zero byte-sized values, dummy values, or other values having an accumulative size in bytes that is less than an overall size in bytes of the first values.

13. The method of claim 10, further comprising:
updating the hash-based index and the tree-based index to modify the key-value data structure, in response to an UPDATE, DELETE, or PUT commands.

14. A device comprising means to perform the method of any one of claims 10 to 13.

15. A computer readable storage device having stored thereon instructions that when executed by one or more processors result in operations comprising: the method according to any one of claims 10 to 13.
